# EUROPEAN PATENT APPLICATION

(11) **EP 0 564 749 A1**
(43) Date of publication of application: **13.10.1993**
(21) Application number: 92500046.5
(22) Date of filing: 24.04.1992
(51) Int. Cl.: F16B 12/14

(54) **Built-in nut for furniture**

(30) Priority: 25.03.1992 ES 9200643
(71) Applicant: FACIL MOBEL SA, E-08185 Llica de Vall (Barcelona) (ES)
(72) Inventor: Gutierrez Lorente, José Maria, E-08185 Lliça De Vall, Barcelona (ES)

(57) **Abstract**

That fits into a cavity in a board, this is joined by a screw accommodated in another board in order to join the two.

The nut in question is made up of two pieces, an enveloping body (1), similar from the exterior as a conventional nut of this type, except that it has a wide diametrical groove (3), with a narrowed opening (4), and a nut per se (5) which fits into the diametrical chamber (3), making it impossible to turn or move axially, but enabling a longitudinal displacement within the groove, in order to absorb possible maladjustments between the boards to be joined.

## Description

### AIM OF THE INVENTION

The following invention refers to a built-in nut, of the type used in the field of furniture, specifically for wooden furniture, this nut has been slightly perfected in order to allow a better adjustment between the panels of the piece of furniture being joined.

### BACKGROUND OF THE INVENTION

As is already known, one of the most usual methods used to fix two perpendicular panels together - for example, a horizontal beam to a vertical stanchion - consists in installing a built-in nut, generally in the stanchion, while a screw is placed in a cavity of the beam, generally situated in the centre of the beam with lateral access through which, along with an eccentric, acts axially on said screw, which has been screwed on to the complementary nut before being introduced into the beam.

As is evident, for a perfect finish to the piece of furniture, the front edge of the beams should normally result perfectly coplanar with the front edge of the vertical stanchions, which makes for great precision in the cavity to build-in the screw and install the nut, considering that, on the contrary, and as frequently occurs, maladjustments are found in the front level between these pieces.

### DESCRIPTION OF THE INVENTION

The built-in nut proposed by this invention has been conceived and structured in order to solve the above-raised problem in a completely satisfactory way, allowing the correction of possible maladjustments between the fitting of the pieces and their union to implant said nut and its complementary screw.

More specifically, the proposed built-in nut centres its caracteristics on the fact that it is structured using the functional combination of two pieces, one being an enveloping body with the conventional, approximately cylindrical configuration and the same toothed profile for its installation by pressure in the cavity of one of the pieces to be joined, but with the special characteristic that said enveloping body is made up of diametrical grooves, with a narrowed canal, in which the other pieces, constituting the actual nut, fit diametrically.

### DESCRIPTION OF THE DRAWINGS

In order to complement the description and with the aim of aiding in a better understanding of the characteristics of the invention, and as an integrating part of this descriptive report, a set of drawings has been included in which the following has been represented in an illustrative and unrestricting manner:
Figure 1.- Indicates a two-dimensional view of a built-in nut for furniture drawn according to the aim of the invention.
Figure 2.- Shows a cross-section view of the two pieces composing the nut, separated.
Figure 3.- Represents a bird's-eye view of the two pieces indicated in the preceding figure.
Figure 4.- Finally, this figure shows a two-dimensional detail of the union between the two panels of furniture with the claimed built-in nut.

### A PREFERABLE WAY OF CARRYING OUT THE INVENTION

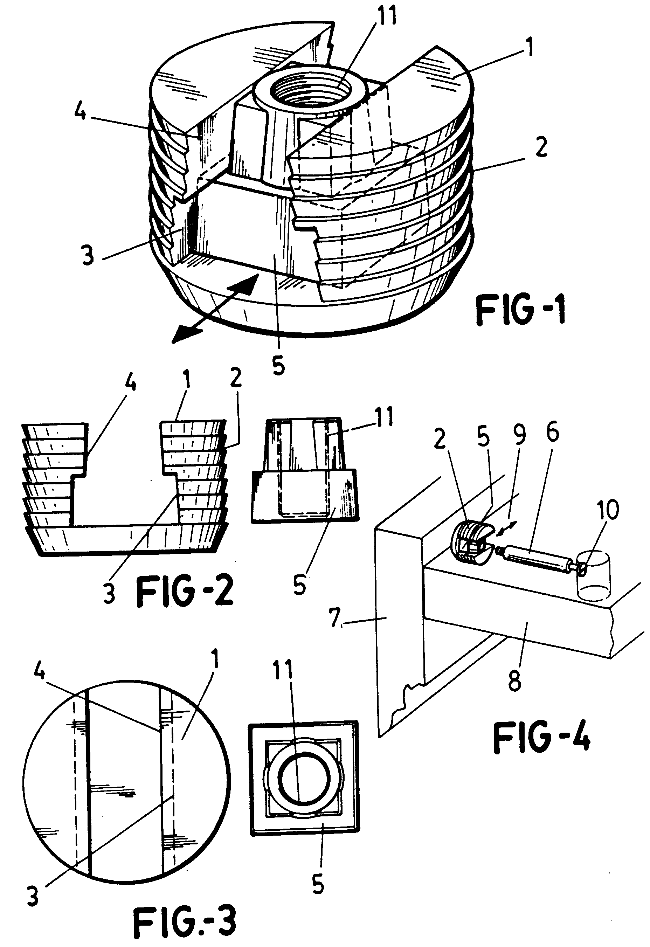

In view of the above figures, and in particular figures 1 to 3, it can be seen how the claimed built-in nut is made-up of two pieces, comprising an enveloping body (19, with an approximately cylindrical configuration, and exterior perimetrical canals with serrated edging (2), which allows for easy installation of the piece into its corresponding cavity simply by using pressure, but makes its posterior extraction impossible, also with the special feature that this piece (1) has a wide, diametrical canal (3) with a narrowed opening (4), this opening may be stepped, as in the practical example shown in the figures, or in any other form, such as dovetailed, without intrinsically changing the invention in any way.

In either case, the second piece (5) is placed in the cavity of the mentioned canal (3), this second piece is made up of the actual nut, with a profile that coincides with that of the canal (3) in order to be left axially immobilized in relation to the outer piece (1), although this piece can be moved diametrically in the lodgings of the piece (1) lengthways along the canal (3), in order to correct possible errors in the fittings for the nut's lodgings (1) and the complementary screw (6), resulting in a perfect frontal adjustment between pieces (7) and (8) to be joined such as is shown in figure 4.

In figure 4, we can see how, faced with a small error in the fitting for the nut (1) or the screw's fitting (6) by moving the canal (5) in the direction of the arrows (9) which correspond to a possible regulating movement in order to obtain a perfect adjustment between the front edges of pieces (7) and (8), this error or maladjustment can be corrected before the final tightening of the screw (6) with an eccentric that acts on its extremity (10) opposite the nut (1), simply by conveniently mobilizing pieces (7) and (8), in respect to each other, until a definitive correct positioning is obtained, since this slight mutual displacement is perfectly feasible by moving piece (5) which constitutes the nut per se, in the enveloping body (1), as the screw (6) is already fixed to the axial orifice and screwed (11) to the nut per se (5). It is not considered necessary to extend this description so that an expert in the field may understand the reach of this invention and the advantages derived from it.

The materials, as well as their shape, size and arrangement are susceptible to variation, as long as this does not assume an alteration in the essence of the invention.

The terminology used in this report should be taken at all times in the widest sense and not be limiting.

## Claims

1. A built-in nut for furniture, of the type that, in collaboration with a complementary screw, allows the union of two pieces of timber or boards, in a perpendicular position. Basically, it is characterised by the fact that it is formed via the functional combination of two parts, a enveloping body (1), basically cylindrical, equipped with an external surface of the conventional toothed profile (2) which enhances its installation by pressure into its corresponding cavity and which avoids its extraction, an enveloping body crossed diametrically by a wide canal (3), also with the possibility of diametrically sliding is the second piece (5), which is made up of the actual nut and is where the corresponding screw is fitted (6), having forseen that said canal in the enveloping body should have a narrowed opening (4), and that the nut (5) should have a complementary profile in order to be retained inside the other.
